(19) **Europäisches Patentamt / European Patent Office / Office européen des brevets**

(11) **EP 4 657 393 A1**

(12) **EUROPEAN PATENT APPLICATION**
published in accordance with Art. 153(4) EPC

(43) Date of publication:
03.12.2025 Bulletin 2025/49

(21) Application number: 23919435.0

(22) Date of filing: 20.11.2023

(51) International Patent Classification (IPC):
G06V 20/56 (2022.01)　　G06T 7/60 (2017.01)
G06T 7/73 (2017.01)　　G06V 10/762 (2022.01)

(52) Cooperative Patent Classification (CPC):
G06T 7/60; G06T 7/73; G06V 10/762; G06V 20/56

(86) International application number:
PCT/CN2023/132529

(87) International publication number:
WO 2024/159871 (08.08.2024 Gazette 2024/32)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.01.2023 CN 202310092142

(71) Applicant: Shenzhen Yinwang Intelligent
Technologies Co., Ltd.
Shenzhen, Guangdong 518110 (CN)

(72) Inventors:
• XUE, Peng
Shenzhen, Guangdong 518129 (CN)

• WANG, Jinnan
Shenzhen, Guangdong 518129 (CN)
• LIU, Xing
Shenzhen, Guangdong 518129 (CN)
• LIU, Ziluan
Shenzhen, Guangdong 518129 (CN)
• CHEN, Taiyu
Shenzhen, Guangdong 518129 (CN)

(74) Representative: Körber, Martin Hans
Mitscherlich PartmbB
Patent- und Rechtsanwälte
Karlstraße 7
80333 München (DE)

(54) **CURB DETECTION METHOD, APPARATUS AND SYSTEM, COMPUTER READABLE STORAGE MEDIUM, AND VEHICLE**

(57) This application discloses a curb detection method and apparatus, a system, a computer-readable storage medium, and a vehicle, relating to the field of autonomous driving technologies. The method includes: obtaining at least one to-be-detected image shot by an image capturing apparatus located on a vehicle, recognizing the at least one to-be-detected image to obtain a recognition result, and obtaining detection information of a curb based on the recognition result. The detection information includes at least one of the following: geometry information, distance information, or height information of the curb. In the method, curb detection is performed through image recognition, and reliability of curb detection is relatively high because the curb detection is performed without relying on a reflected signal. In addition, because more comprehensive detection information can be obtained, a parking policy or a driving route that is subsequently selected or planned based on the detection information of the curb has relatively high adaptability to the curb, thereby improving the accuracy of the parking policy or the driving route.

```
┌─────────────────────────────────────────────────────────────────┐
│ Obtain at least one to-be-detected image shot by an image        │ S201
│ capturing apparatus located on a vehicle, where the to-be-       │
│ detected image includes a curb, and the curb includes an         │
│ upper edge line, a lower edge line, and a middle seam line        │
└─────────────────────────────────────────────────────────────────┘
                              │
                              ▼
┌─────────────────────────────────────────────────────────────────┐
│ Recognize the at least one to-be-detected image to obtain a      │ S202
│ recognition result of the at least one to-be-detected image       │
└─────────────────────────────────────────────────────────────────┘
                              │
                              ▼
┌─────────────────────────────────────────────────────────────────┐
│ Obtain detection information of the curb based on the            │ S203
│ recognition result, where the detection information includes     │
│ at least one of the following: geometry information, distance     │
│ information, or height information of the curb                     │
└─────────────────────────────────────────────────────────────────┘
```

FIG. 2

## Description

This application claims priority to Chinese Patent Application No. 202310092142.4, filed on January 30, 2023 and entitled "CURB DETECTION METHOD AND APPARATUS, SYSTEM, COMPUTER-READABLE STORAGE MEDIUM, AND VEHICLE", which is incorporated herein by reference in its entirety.

## TECHNICAL FIELD

This application relates to the field of autonomous driving technologies, and in particular, to a curb detection method and apparatus, a system, a computer-readable storage medium, and a vehicle.

## BACKGROUND

In an automatic driving task, a vehicle detects a curb in an autonomous driving scenario for route planning, parking space identification, parking space positioning, and other functions. For example, after a vehicle is parked into a parking space, a distance between the vehicle and a curb is determined by detecting the curb, to complete parking space positioning. Therefore, there is a need for a curb detection method to detect a curb in an autonomous driving scenario.

In a related technology, a lidar is installed on a vehicle. The lidar transmits laser signals to a curb, to detect the curb based on laser signals reflected by the curb. However, due to a low height of the curb, the reflection area of laser signals by the curb is small, resulting in few reflected laser signals received by the lidar, and in low reliability of curb detection.

## SUMMARY

This application provides a curb detection method and apparatus, a system, a computer-readable storage medium, and a vehicle, to improve reliability of curb detection.

According to a first aspect, a curb detection method is provided. The method includes: obtaining at least one to-be-detected image shot by an image capturing apparatus located on a vehicle, where the to-be-detected image includes a curb, and the curb includes an upper edge line, a lower edge line, and a middle seam line; then, recognizing the at least one to-be-detected image to obtain a recognition result of the at least one to-be-detected image; and obtaining detection information of the curb based on the recognition result, where the detection information includes at least one of the following: geometry information, distance information, or height information of the curb.

In the method, curb detection is performed through image recognition. Because the curb detection is performed without relying on reflected signals, reliability of performing curb detection in the method is relatively high. In addition, a plurality of types of detection information may be obtained in the method, so that the obtained detection information is relatively comprehensive. Therefore, a parking policy or a driving route that is subsequently selected or planned based on the detection information of the curb has relatively high adaptability to the curb, and accuracy of the selected parking policy or the planned driving route is relatively high.

In a possible implementation, the recognition result includes at least one of the upper edge line or the lower edge line of the curb, and the detection information includes the geometry information. The obtaining detection information of the curb based on the recognition result includes: performing geometry fitting on at least one of the upper edge line or the lower edge line of the curb in any to-be-detected image, to obtain the geometry information of the curb. Because the upper edge line and the lower edge line of the curb are basically consistent, when the recognition result includes both the upper edge line and the lower edge line, geometry fitting may be performed only on the upper edge line or the lower edge line, thereby reducing a calculation amount for obtaining the geometry information.

In a possible implementation, the recognition result includes the lower edge line and the middle seam line of the curb, and the detection information includes the distance information of the curb. The obtaining detection information of the curb based on the recognition result includes: obtaining a first lower edge point at which the middle seam line intersects with the lower edge line in any to-be-detected image; and obtaining a first horizontal distance between the first lower edge point and the image capturing apparatus based on a position of the first lower edge point in any to-be-detected image, a focal length of the image capturing apparatus, and an installation height of the image capturing apparatus, where the distance information includes the first horizontal distance. In the method, the distance information may be obtained based on a single to-be-detected image. In other words, in this case, during recognition of the to-be-detected image, just a single to-be-detected image may be recognized to obtain the recognition result, and efficiency in obtaining the recognition result is relatively high.

In a possible implementation, the recognition result further includes the upper edge line of the curb, and the detection information further includes the height information of the curb. The obtaining detection information of the curb based on the recognition result further includes: obtaining a first upper edge point at which the middle seam line intersects with the upper edge point in any to-be-detected image, where the first upper edge point and the first lower edge point are located on the same middle seam line; and obtaining the height information of the curb based on a position of the first upper edge point in any to-be-detected image, the first horizontal distance, the focal length of the image capturing apparatus, and the installation height of the image capturing apparatus. The height information of the curb may also be obtained based on the recognition result of a single to-be-detected image. In this case, the recognition result is obtained by performing recognition on the single to-be-detected image, and efficiency in obtaining the recognition result is relatively high.

In a possible implementation, there are a plurality of to-be-detected images, the recognition result includes the upper edge line and the middle seam line of the curb, and the detection information includes the distance information of the curb. The obtaining detection information of the curb based on the recognition result includes: obtaining a second upper edge point at which the middle seam line intersects with the upper edge line in a first image, and a third upper edge point that is in a second image and that is located at a same position on the curb as the second upper edge point, where the first image is any to-be-detected image in the plurality of to-be-detected images other than a last to-be-detected image, and the second image is any to-be-detected image shot later than the first image; and obtaining a second horizontal distance between a curb location of the second upper edge point and the image capturing apparatus based on a position of the second upper edge point in the first image, a position of the third upper edge point in the second image, positioning information of the vehicle, and rotation information of the vehicle, where the distance information includes the second horizontal distance. In the method, the distance information may alternatively be obtained based on a recognition result of the plurality of to-be-detected images, and a manner of obtaining the distance information is relatively flexible.

In a possible implementation, the detection information further includes the height information of the curb. The obtaining detection information of the curb based on the recognition result further includes: obtaining the height information of the curb based on the position of the second upper edge point in the first image, the position of the third upper edge point in the second image, the second horizontal distance, and the installation height of the image capturing apparatus. In the method, the height information may alternatively be obtained based on a recognition result of the plurality of to-be-detected images, and a manner of obtaining the height information is relatively flexible.

In a possible implementation, the at least one to-be-detected image is shot by a same image capturing apparatus. A quantity of apparatuses for shooting the to-be-detected image is relatively small, and therefore costs of the apparatus are relatively low.

According to a second aspect, a curb detection apparatus is provided. The apparatus includes the following modules.

An obtaining module is configured to obtain at least one to-be-detected image shot by an image capturing apparatus located on a vehicle. The to-be-detected image includes a curb, and the curb includes an upper edge line, a lower edge line, and a middle seam line.

A recognition module is configured to recognize the at least one to-be-detected image to obtain a recognition result of the at least one to-be-detected image.

A detection module is configured to obtain detection information of the curb based on the recognition result. The detection information includes at least one of the following: geometry information, distance information, or height information of the curb.

In a possible implementation, the recognition result includes at least one of the upper edge line or the lower edge line of the curb, and the detection information includes the geometry information. The detection module is configured to perform geometry fitting on at least one of the upper edge line or the lower edge line of the curb in any to-be-detected image, to obtain the geometry information of the curb.

In a possible implementation, the recognition result includes the lower edge line and the middle seam line of the curb, and the detection information includes the distance information of the curb. The detection module is configured to: obtain a first lower edge point at which the middle seam line intersects with the lower edge line in any to-be-detected image, and obtain a first horizontal distance between the first lower edge point and the image capturing apparatus based on a position of the first lower edge point in any to-be-detected image, a focal length of the image capturing apparatus, and an installation height of the image capturing apparatus, where the distance information includes the first horizontal distance.

In a possible implementation, the recognition result further includes the upper edge line of the curb, and the detection information further includes the height information of the curb. The detection module is further configured to: obtain a first upper edge point at which the middle seam line intersects with the upper edge point in any to-be-detected image, where the first upper edge point and the first lower edge point are located on the same middle seam line, and obtain the height information of the curb based on a position of the first upper edge point in any to-be-detected image, the first horizontal distance, the focal length of the image capturing apparatus, and the installation height of the image capturing apparatus.

In a possible implementation, there are a plurality of to-be-detected images, the recognition result includes the upper edge line and the middle seam line of the curb, and the detection information includes the distance information of the curb. The detection module is configured to: obtain a second upper edge point at which the middle seam line intersects with the upper edge line in a first image, and a third upper edge point that is in a second image and that is located at a same position on the curb as the second upper edge point, where the first image is any to-be-detected image in the plurality of to-be-detected images other than a last to-be-detected image, and the second image is any to-be-detected image shot later than the first image, and obtain a second horizontal distance between a curb location of the second upper edge point and the image capturing apparatus based on a position of the second upper edge point in the first image, a position of the third upper edge point in the second image, positioning information of the vehicle, and rotation information of the vehicle, where the distance information includes the second horizontal distance.

In a possible implementation, the detection information further includes the height information of the curb. The detection module is further configured to obtain the height information of the curb based on the position of the second upper edge point in the first image, the position of the third upper edge point in the second image, the second horizontal distance, and the installation height of the image capturing apparatus.

In a possible implementation, the at least one to-be-detected image is shot by a same image capturing apparatus.

According to a third aspect, a vehicle is provided. The vehicle includes any curb detection apparatus in the second aspect.

According to a fourth aspect, a computer system is provided. The computer system includes a processor, and when the processor executes program instructions or code, the computer system implements any curb detection method in the first aspect. For example, the computer system further includes a memory, and the memory is configured to store the program instructions or the code.

According to a fifth aspect, a computer-readable storage medium is provided. The computer-readable storage medium stores at least one program instruction or code. The program instruction or the code is executed by a computer, and the program instruction or the code is used to enable the computer to implement any curb detection method in the first aspect.

According to a sixth aspect, a communication apparatus is provided. The apparatus includes a transceiver, a memory, and a processor. The transceiver, the memory, and the processor communicate with each other through an internal connection path. The memory is configured to store instructions. The processor is configured to execute the instructions stored in the memory, to control the transceiver to receive a signal and control the transceiver to send a signal. When the processor executes the instructions stored in the memory, the processor performs any curb detection method in the first aspect or the second aspect.

For example, there are one or more processors, and there are one or more memories.

For example, the memory may be integrated with the processor, or the memory and the processor are separately disposed.

In a specific implementation process, the memory may be a non-transitory memory, for example, a read-only memory (ROM). The memory and the processor may be integrated on a same chip, or may be separately disposed on different chips. A type of the memory and a manner of disposing the memory and the processor are not limited in this application.

According to a seventh aspect, a computer program product is provided. The computer program product includes computer program instructions or code. The computer program instructions or the code is run by a computer, and the computer program instructions or the code is used to enable the computer to perform any curb detection method according to the first aspect.

According to an eighth aspect, a chip is provided. The chip includes a processor, and the processor is configured to run program instructions or code, to enable a device including the chip to perform any curb detection method in the first aspect.

For example, the chip further includes an input interface, an output interface, and a memory. The input interface, the output interface, the processor, and the memory are connected through an internal connection path, and the memory is configured to store the program instructions or the code.

It should be understood that, for beneficial effects achieved by the technical solutions in the second aspect to the eighth aspect and the corresponding possible implementations of the second aspect to the eighth aspect in this application, reference may be made to the foregoing technical effects of the first aspect and the corresponding possible implementations of the first aspect. Details are not described herein.

## BRIEF DESCRIPTION OF DRAWINGS

FIG. 1 is a diagram of a parking scenario according to an embodiment of this application;
FIG. 2 is a flowchart of a curb detection method according to an embodiment of this application;
FIG. 3 is a diagram of an upper edge line, a lower edge line, a middle seam line, an upper edge point, and a lower edge point according to an embodiment of this application;
FIG. 4 is a diagram of a process of obtaining distance information and height information according to an embodiment of this application;
FIG. 5 is a diagram of another process of obtaining distance information and height information according to an embodiment of this application;
FIG. 6 is a diagram of a structure of a curb detection apparatus according to an embodiment of this application; and
FIG. 7 is a diagram of a structure of a computer system according to an embodiment of this application.

## DESCRIPTION OF EMBODIMENTS

Terms used in implementations of this application are merely used to explain embodiments of this application, but are not intended to limit this application. The following describes embodiments of this application with reference to the accompanying drawings.

An autonomous driving scenario relates to a plurality of autonomous driving tasks, for example, a route planning task, a parking space identification task, and a parking space positioning task. When completing the autonomous driving task, a vehicle usually needs to perform curb detection. For example, the vehicle determines a location of the vehicle by detecting a distance between the vehicle and a curb in a driving process. For another example, when parking into a parking space, the vehicle determines, by detecting a distance between the vehicle and a curb, whether the vehicle is parked into the parking space and a distance between the vehicle and a boundary of the parking space. Therefore, there is a need for a curb detection method to detect a curb by the vehicle.

In a related technology, a lidar is installed on a vehicle, and the lidar transmits a laser signal to a curb and detects the curb based on a received reflected laser signal. However, an area of reflection of the laser signal by the curb is small, resulting in few reflected laser signals received by the lidar, and unstable effect of curb detection. In another related technology, an ultrasonic radar is installed on a vehicle, and the ultrasonic radar transmits an ultrasonic wave to a curb and detects the curb based on a received ultrasonic wave. However, due to a large wavelength of the ultrasonic wave, detection resolution is low when the curb is detected, making it difficult to determine a shape of the curb. In addition, similar to the lidar-based curb detection solution, the ultrasonic radar-based curb detection solution also has a problem of few received ultrasonic signals, and unstable effect of curb detection due to a small area of reflection.

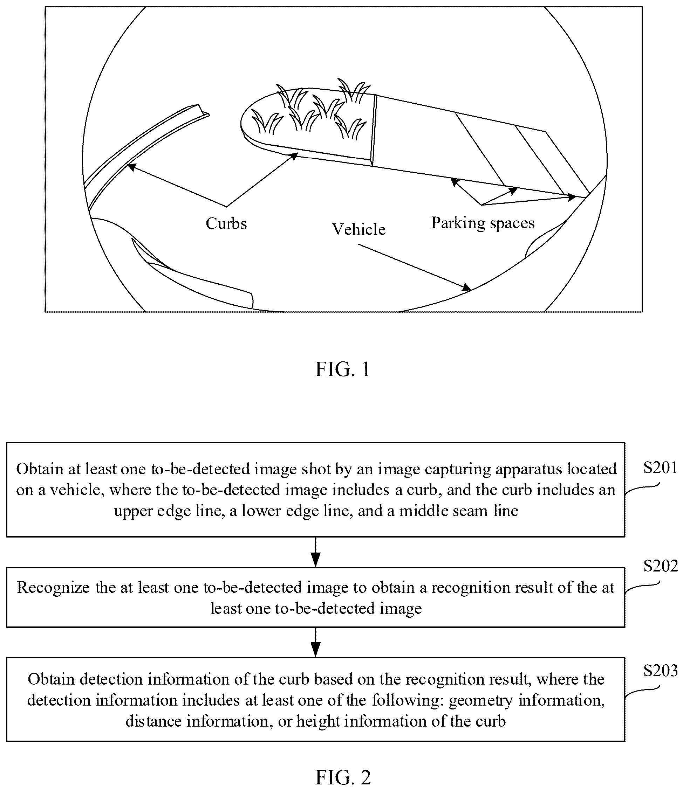

Various embodiments of this application provide a curb detection method, to detect a curb through image recognition, so as to improve stability of curb detection effect. The method may be applied to a vehicle. One or more image capturing apparatuses are installed on the vehicle, and the one or more image capturing apparatuses may be installed on a side part or a rear part of the vehicle. In addition, the method may be used to perform curb detection in a scenario including a curb. The scenario including a curb includes a curb next to a parking space, and the parking space may be a parking space in a community or a parking space next to a road. FIG. 1 is a diagram of a parking scenario according to an embodiment of this application. As shown in FIG. 1, there are curbs around a parking space and behind a vehicle, and the vehicle needs to detect the curbs in a parking process, so that the vehicle can accurately park into the parking space based on a curb detection result.

The curb detection method provided in an embodiment of this application may be shown in FIG. 2. The method may be applied to a vehicle, and an image capturing apparatus is installed on the vehicle. As shown in FIG. 2, the method includes but is not limited to S201 to S203.

S201: Obtain at least one to-be-detected image shot by the image capturing apparatus located on the vehicle, where the to-be-detected image includes a curb, and the curb includes an upper edge line, a lower edge line, and a middle seam line.

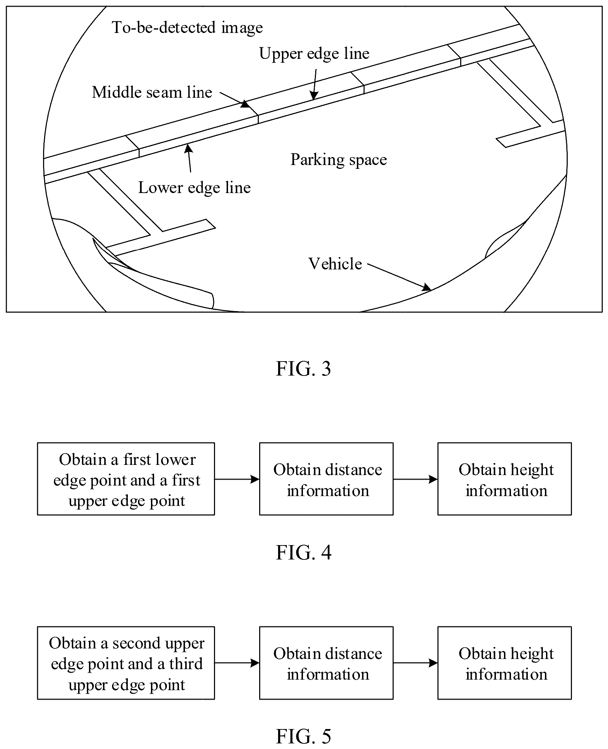

The middle seam line may separately intersect with the upper edge line and the lower edge line. In this embodiment of this application, when the curb is formed through a plurality of connected curb stones, the middle seam line is a boundary line of two adjacent curb stones. For example, the at least one to-be-detected image is shot by a same image capturing apparatus. The image capturing apparatus may be a camera on the vehicle, or an independent image capturing apparatus disposed on the vehicle. When there are a plurality of image capturing apparatuses located on the vehicle, a to-be-detected image shot by each image capturing apparatus is used to perform the method in this embodiment of this application. For example, two cameras are installed on the vehicle: a camera 1 and a camera 2. In this case, at least one to-be-detected image shot by the camera 1 is used to perform the method provided in this embodiment of this application at least once, and at least one to-be-detected image shot by the camera 2 is used to perform the method provided in this embodiment of this application at least once. The upper edge line, the lower edge line, and the middle seam line of the curb may be shown in FIG. 3.

S202: Recognize the at least one to-be-detected image to obtain a recognition result of the at least one to-be-detected image.

According to the method provided in this embodiment of this application, a contour line of the curb in the to-be-detected image may be recognized. The contour line includes but is not limited to at least one of an upper edge line, a lower edge line, and a middle seam line of a curb. To be specific, the recognizing the at least one to-be-detected image to obtain a recognition result of the at least one to-be-detected image may include: performing contour line recognition on the curb in the at least one to-be-detected image, to obtain the contour line of the curb, where the contour line of the curb is used as the recognition result. For any to-be-detected image, when contour line recognition is performed on the curb in any to-be-detected image, the contour line of the curb in any to-be-detected image may be directly recognized, or the curb in the image may be segmented first, and contour line recognition is performed on a plurality of obtained segmented images. Operations of performing contour line recognition on the plurality of obtained segmented images may be performed in parallel, thereby improving efficiency of contour line recognition. For example, before the at least one to-be-detected image is recognized, the at least one to-be-detected image may be denoised, to avoid interference caused by noise in the to-be-detected image to a recognition process, and improve recognition accuracy.

In a possible implementation, the operation of performing contour line recognition on the curb in the at least one to-be-detected image is performed by using a first image recognition model. For example, each to-be-detected image is input into the first image recognition model, and a contour line of a curb in each to-be-detected image is recognized by using the first image recognition model, to obtain the contour line of the curb in each to-be-recognized image output by the first image recognition model. The first image recognition model in this embodiment of this application may be any artificial intelligence (AI) model that can implement contour line recognition, for example, a convolutional neural network (CNN) model, a multilayer perceptron (MLP) model, or you only look once (YOLO) model. A manner of obtaining the first image recognition model includes but is not limited to training an initial AI model based on a training sample. The training sample may be an image of a curb with a known contour line, and the initial AI model is trained based on the training sample to obtain the first image recognition model that meets a requirement. For example, that the requirement is met means that accuracy reaches a threshold or a model is converged.

S203: Obtain detection information of the curb based on the recognition result, where the detection information includes at least one of the following: geometry information, distance information, or height information of the curb.

When a plurality of types of detection information are obtained, the obtained detection information is relatively comprehensive. Therefore, a parking policy or a driving route that is subsequently selected or planned based on the detection information of the curb has relatively high adaptability to the curb, and accuracy of the selected parking policy or the planned driving route is relatively high.

For example, the recognition result includes at least one of the upper edge line or the lower edge line of the curb. The detection information includes the geometry information of the curb. The geometry information of the curb may be obtained by performing geometry fitting on at least one of the upper edge line or the lower edge line of the curb. In other words, the obtaining detection information of the curb based on the recognition result includes: performing geometry fitting on at least one of the upper edge line or the lower edge line of the curb in any to-be-detected image, to obtain the geometry information of the curb. The geometry information of the curb may indicate whether a form of the curb is a straight line or a curve. For example, the geometry information of the curb includes a shape of the curb or a label that indicates a shape of the curb, and one label corresponds to one shape. In addition, because lines of the upper edge line and the lower edge line of the curb are basically the same, when the recognition result includes both the upper edge line and the lower edge line, geometry fitting may be performed only on the upper edge line or the lower edge line, thereby reducing a calculation amount for performing geometry fitting.

In the method provided in this embodiment of this application, geometry fitting may be performed on at least one of the upper edge line or the lower edge line of the curb. Geometry fitting is performed, for example, on the upper edge line. The upper edge line may be divided by using grids, so that each upper edge point included in the upper edge line falls in at least one grid, and a quantity of upper edge points in each grid may be the same or different. After the division, upper edge points in each grid may be clustered based on the quantity of upper edge points in each grid, and a plurality of feature points indicating a form of the upper edge line are obtained based on a clustering result. For example, one clustering center is used as one feature point. A clustering manner includes K-means clustering, mean shift clustering, density-based clustering, or the like. After the plurality of feature points are obtained, the plurality of feature points are connected, and a connected line is used as the geometry information of the curb.

In this embodiment of this application, the distance information of the curb and the height information of the curb may be obtained based on a single to-be-detected image or a plurality of to-be-detected images. The two manners of obtaining the detection information are flexible.

For example, when the detection information is obtained based on a single to-be-detected image, the recognition result includes the lower edge line and the middle seam line of the curb, and the detection information includes the distance information of the curb. The obtaining detection information of the curb based on the recognition result includes: obtaining a first lower edge point at which a middle seam line intersects with the lower edge line in any to-be-detected image; and obtaining a first horizontal distance between the first lower edge point and the image capturing apparatus based on a position of the first lower edge point in any to-be-detected image, a focal length of the image capturing apparatus, and an installation height of the image capturing apparatus, where the distance information includes the first horizontal distance. The first horizontal distance is a distance between the first lower edge point and the image capturing apparatus in a direction parallel to the ground. The foregoing processes of obtaining the first lower edge point and the first horizontal distance may respectively correspond to processes of obtaining the first lower edge point and the distance information shown in FIG. 4.

In this embodiment of this application, two similar triangles may be constructed based on the position of the first lower edge point in any to-be-detected image, the focal length of the image capturing apparatus, the installation height of the image capturing apparatus, and the first horizontal distance, to obtain the first horizontal distance. For example, the position of the first lower edge point in any to-be-detected image, the focal length of the image capturing apparatus, the installation height of the image capturing apparatus, and the first horizontal distance satisfy the following relationship:

$$y1/H=f/z1$$

Herein, y1 represents the position of the first lower edge point in any to-be-detected image, H represents the installation height of the image capturing apparatus, f represents the focal length of the image capturing apparatus, and z1 represents the first horizontal distance.

After the first horizontal distance is obtained, the height information of the curb may be further obtained based on the first horizontal distance. For example, the recognition result further includes the upper edge line of the curb, and the detection information further includes the height information of the curb. The obtaining detection information of the curb based on the recognition result further includes: obtaining a first upper edge point at which the middle seam line intersects with the upper edge point in any to-be-detected image, where the first upper edge point and the first lower edge point are located on the same middle seam line; and obtaining the height information of the curb based on a position of the first upper edge point in any to-be-detected image, the first horizontal distance, the focal length of the image capturing apparatus, and the installation height of the image capturing apparatus. The foregoing processes of obtaining the first upper edge point and the height information may respectively correspond to processes of obtaining the first upper edge point and the height information shown in FIG. 4.

Because the first upper edge point and the first lower edge point are located on the same middle seam line, the first upper edge point and the first lower edge point may be referred to as a pair of matched upper edge point and lower edge point. When both the first horizontal distance and the height information of the curb are obtained, a process of obtaining the first upper edge point may be performed before the first horizontal distance is obtained, that is, an operation of obtaining the first upper edge point may be performed after the first lower edge point is obtained. If the first upper edge point is not obtained from any to-be-detected image, for example, an intersection point between the middle seam line and the upper edge point is covered by another object in the image, another to-be-detected image may be used to perform an operation of obtaining the first horizontal distance and the height information of the curb, thereby reducing a calculation amount needed for obtaining the height information of the curb.

In this embodiment of this application, two similar triangles may be constructed based on the position of the first upper edge point in any to-be-detected image, the first horizontal distance, the focal length of the image capturing apparatus, the installation height of the image capturing apparatus, and the height of the curb, to obtain the height information of the curb. For example, the position of the first upper edge point in any to-be-detected image, the first horizontal distance, the focal length of the image capturing apparatus, the installation height of the image capturing apparatus, and the height of the curb satisfy the following relationship:

$$y2/(H-h)=f/z1$$

Herein, y2 represents the position of the first upper edge point in any to-be-detected image, H represents the installation height of the image capturing apparatus, h represents the height of the curb, f represents the focal length of the image capturing apparatus, and z1 represents the first horizontal distance.

For example, when the detection information is obtained based on a plurality of to-be-detected images, there are the plurality of to-be-detected images, the recognition result includes the upper edge line and the middle seam line of the curb, and the detection information includes the distance information of the curb. The obtaining detection information of the curb based on the recognition result includes: obtaining a second upper edge point at which the middle seam line intersects with the upper edge line in a first image, and a third upper edge point that is in a second image and that is located at a same position on the curb as the second upper edge point, where the first image is any to-be-detected image in the plurality of to-be-detected images other than a last to-be-detected image, and the second image is any to-be-detected image shot later than the first image; and obtaining a second horizontal distance between a curb location of the second upper edge point and the image capturing apparatus based on a position of the second upper edge point in the first image, a position of the third upper edge point in the second image, positioning information of the vehicle, and rotation information of the vehicle, where the detection information of the curb includes the second horizontal distance. The foregoing processes of obtaining the second upper edge point, the third upper edge point, and the second horizontal distance may respectively correspond to processes of obtaining the second upper edge point and the third upper edge point, and the distance information shown in FIG. 5.

In this embodiment of this application, the second upper edge point may be first obtained from the first image, and then the third upper edge point that is located at the same position on the curb as the second upper edge point is obtained from the second image. Alternatively, upper edge points in the first image and the second image are first obtained, and then the second upper edge point and the third upper edge point that are located at the same position on the curb are obtained from the first image and the second image. In this embodiment of this application, a manner of obtaining the second upper edge point and the third upper edge point is relatively flexible. The second upper edge point and the third upper edge point may be referred to as a pair of matched upper edge points. If the third upper edge point that is located at the same position on the curb as the second upper edge point is not obtained from the second image, another to-be-detected image shot later than the first image may be used as the second image, and an operation of obtaining the third upper edge point that is located at the same position on the curb as the second upper edge point is performed.

For example, an operation of obtaining an upper edge point in the to-be-detected image is performed by using a second image recognition model. For example, each to-be-detected image is input into the second image recognition model, and an upper edge point in each to-be-detected image is recognized by using the second image recognition model, to obtain the upper edge point in each to-be-recognized image output by the second image recognition model. The second image recognition model may be further configured to obtain the second upper edge point and the third upper edge point. For example, the second image recognition model may obtain, by using an optical flow method, a Kalman filtering method, or a nearest neighbor matching method, upper edge points at a same position in a plurality of continuously input to-be-detected images.

The second image recognition model in this embodiment of this application may be any AI model that can obtain the upper edge point, for example, a CNN model, an MLP model, or YOLO. A manner of obtaining the second image recognition model includes but is not limited to training an initial AI model based on a training sample. The training sample may be an image including a known upper edge point, and the initial AI model is trained based on the training sample to obtain the second image recognition model that meets a requirement. For example, that the requirement is met means that accuracy reaches a threshold, or a quantity of training times reaches a preset quantity of times, or a model is converged. The first image recognition model and the second image recognition model may be implemented through a same AI model, or may be implemented through different AI models. This is not limited in this embodiment of this application.

In a possible implementation, a positioning apparatus and a pose detection apparatus are disposed on the vehicle. The positioning apparatus is configured to obtain the positioning information of the vehicle, and the pose detection apparatus is configured to obtain the rotation information of the vehicle. The pose detection apparatus may be further configured to obtain displacement information of the vehicle. For example, the pose detection apparatus is an inertial measurement unit (IMU), and the IMU is configured to obtain the displacement information of the vehicle, and the rotation information of the vehicle. Certainly, when the positioning information of the vehicle is obtained, the displacement information of the vehicle may alternatively be obtained based on the positioning information of the vehicle, and manners of obtaining the displacement information are diversified.

For ease of description, the position of the second upper edge point in the first image is referred to as a first position, and the position of the third upper edge point in the second image is referred to as a second position. For example, the obtaining a second horizontal distance between a curb location of the second upper edge point and the image capturing apparatus based on the first position, the second position, positioning information of the vehicle, and rotation information of the vehicle includes: obtaining the displacement information of the vehicle based on the positioning information of the vehicle; obtaining coordinates of the curb location of the second upper edge point in a physical world based on the first position, the second position, the displacement information of the vehicle, and the rotation information of the vehicle; and calculating the second horizontal distance between the curb location of the second upper edge point and the image capturing apparatus based on the coordinates and the positioning information of the vehicle.

In this embodiment of this application, when the coordinates of the curb location of the second upper edge point in the physical world are obtained based on the first position, the second position, the displacement information of the vehicle, and the rotation information of the vehicle, the coordinates may be obtained by using a triangulation method in a related technology. For example, the first position and the second position are respectively converted into a first coordinate and a second coordinate of the physical world based on a parameter of the image capturing apparatus. A correlation between the first coordinate and the second coordinate is calculated based on the displacement information of the vehicle and the rotation information of the vehicle. The coordinates of the curb location of the second upper edge point in the physical world are calculated based on the correlation between the first coordinate and the second coordinate, the first coordinate, and the second coordinate. The parameter of the image capturing apparatus may be stored in an execution body of the method. For example, if the method is performed by a vehicle, the parameter of the image capturing apparatus is stored in the vehicle.

After the second horizontal distance is obtained, the second horizontal distance may be used to obtain the height information of the curb. For example, the detection information further includes the height information of the curb. The obtaining detection information of the curb based on the recognition result further includes: obtaining the height information of the curb based on the first position, the second position, the second horizontal distance, and the installation height of the image capturing apparatus. For example, two similar triangles are constructed based on the first position, the second horizontal distance, the focal length of the image capturing apparatus, the installation height of the image capturing apparatus, and the height of the curb. Then, two similar triangles are constructed based on the second position, the second horizontal distance, the displacement information of the vehicle, the focal length of the image capturing apparatus, the installation height of the image capturing apparatus, and the height of the curb. In this way, two equations are obtained, to obtain the height of the curb. A principle of a manner of constructing two similar triangles each time is the same as that of the foregoing manner of constructing two similar triangles when the height information of the curb is obtained from the single to-be-detected image, and details are not described herein. The foregoing process of obtaining the height information may correspond to a process of obtaining the height information shown in FIG. 5.

In the method provided in this embodiment of this application, curb detection is performed through image recognition. Because the curb detection is performed without relying on a reflected signal, reliability of performing curb detection in the method is relatively high. In addition, the plurality of types of detection information may be obtained in the method, so that the obtained detection information is relatively comprehensive. Therefore, a parking policy or a driving route that is subsequently selected or planned based on the detection information of the curb has relatively high adaptability to the curb, and accuracy of the selected parking policy or the planned driving route is relatively high.

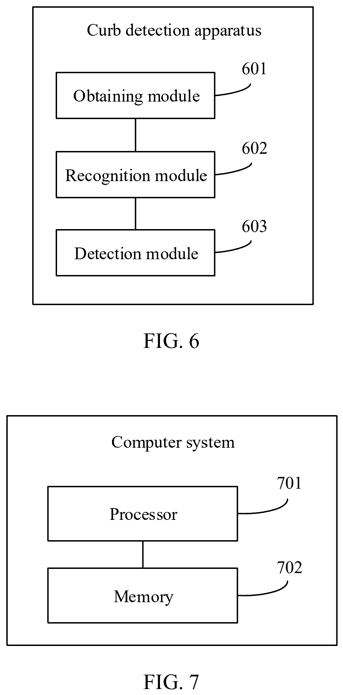

An embodiment of this application further provides a curb detection apparatus. FIG. 6 is a diagram of a structure of a curb detection apparatus according to an embodiment of this application. The apparatus may be used in a vehicle, and the vehicle has at least one image capturing apparatus. Based on a plurality of modules shown in FIG. 6, the curb detection apparatus shown in FIG. 6 can perform all or some operations in the foregoing method embodiments. It should be understood that the apparatus may include more additional modules than the shown modules, or some of the shown modules are omitted. This is not limited in this embodiment of this application. As shown in FIG. 6, the apparatus includes the following modules.

An obtaining module 601 is configured to obtain at least one to-be-detected image shot by the image capturing apparatus located on the vehicle. The to-be-detected image includes a curb, and the curb includes an upper edge line, a lower edge line, and a middle seam line.

A recognition module 602 is configured to recognize the at least one to-be-detected image to obtain a recognition result of the at least one to-be-detected image.

A detection module 603 is configured to obtain detection information of the curb based on the recognition result. The detection information includes at least one of the following: geometry information, distance information, or height information of the curb.

In a possible implementation, the recognition result includes at least one of the upper edge line or the lower edge line of the curb, and the detection information includes the geometry information. The detection module 603 is configured to perform geometry fitting on at least one of the upper edge line or the lower edge line of the curb in any to-be-detected image, to obtain the geometry information of the curb.

In a possible implementation, the recognition result includes the lower edge line and the middle seam line of the curb, and the detection information includes the distance information of the curb. The detection module 603 is configured to: obtain a first lower edge point at which the middle seam line intersects with the lower edge line in any to-be-detected image, and obtain a first horizontal distance between the first lower edge point and the image capturing apparatus based on a position of the first lower edge point in any to-be-detected image, a focal length of the image capturing apparatus, and an installation height of the image capturing apparatus, where the distance information includes the first horizontal distance.

In a possible implementation, the recognition result further includes the upper edge line of the curb, and the detection information further includes the height information of the curb. The detection module 603 is further configured to: obtain a first upper edge point at which the middle seam line intersects with the upper edge point in any to-be-detected image, where the first upper edge point and the first lower edge point are located on the same middle seam line, and obtain the height information of the curb based on a position of the first upper edge point in any to-be-detected image, the first horizontal distance, the focal length of the image capturing apparatus, and the installation height of the image capturing apparatus.

In a possible implementation, there are a plurality of to-be-detected images, the recognition result includes the upper edge line and the middle seam line of the curb, and the detection information includes the distance information of the curb. The detection module 603 is configured to: obtain a second upper edge point at which the middle seam line intersects with the upper edge line in a first image, and a third upper edge point that is in a second image and that is located at a same position on the curb as the second upper edge point, where the first image is any to-be-detected image in the plurality of to-be-detected images other than a last to-be-detected image, and the second image is any to-be-detected image shot later than the first image, and obtain a second horizontal distance between a curb location of the second upper edge point and the image capturing apparatus based on a position of the second upper edge point in the first image, a position of the third upper edge point in the second image, positioning information of the vehicle, and rotation information of the vehicle, where the distance information includes the second horizontal distance.

In a possible implementation, the detection information further includes the height information of the curb. The detection module 603 is further configured to obtain the height information of the curb based on the position of the second upper edge point in the first image, the position of the third upper edge point in the second image, the second horizontal distance, and the installation height of the image capturing apparatus.

In a possible implementation, the at least one to-be-detected image is shot by a same image capturing apparatus.

In the apparatus provided in this embodiment of this application, curb detection is performed through image recognition. Because the curb detection is performed without relying on a reflected signal, reliability of performing curb detection by the apparatus is relatively high. In addition, the apparatus may obtain a plurality of types of detection information, so that the obtained detection information is relatively comprehensive. Therefore, a parking policy or a driving route that is subsequently selected or planned based on the detection information of the curb has relatively high adaptability to the curb, and accuracy of the selected parking policy or the planned driving route is relatively high.

It should be understood that, when the apparatus provided in FIG. 6 implements functions of the apparatus, division into the foregoing functional modules is merely used as an example for description. During actual application, the foregoing functions may be allocated to different functional modules for implementation based on a requirement. In other words, an inner structure of a device is divided into different functional modules, to implement all or some of the functions described above. In addition, the apparatus provided in the foregoing embodiments and the method embodiments pertain to a same concept. For a specific implementation process of the apparatus, refer to the method embodiments. Details are not described herein.

FIG. 7 is a diagram of a structure of a computer system according to an embodiment of this application. The computer system is configured to perform operations related to the curb detection method shown in FIG. 2. For example, the computer system is a server. The server may vary greatly due to different configurations or performance. The computer system may include one or more processors 701 and one or more memories 702. The one or more memories 702 store at least one computer program, and the at least one computer program is loaded and executed by the one or more processors 701. For example, the processor 701 is a central processing unit (CPU). Certainly, the computer system may further include components such as a wired or wireless network interface, a keyboard, and an input/output interface, to perform input/output. The computer system may further include another component configured to implement a device function. Details are not described herein.

An embodiment of this application further provides a vehicle. The vehicle includes any one of the foregoing curb detection apparatuses.

An embodiment of this application further provides a computer system. The computer system includes a processor. The processor is configured to invoke, from a memory, and run instructions stored in the memory, to enable the computer system to implement any one of the foregoing curb detection methods.

In a possible implementation, the computer system further includes an input interface, an output interface, and the memory. The input interface, the output interface, the processor, and the memory are connected through an internal connection path.

An embodiment of this application further provides a computer-readable storage medium. The computer-readable storage medium stores at least one program instruction or code. The program instruction or the code is executed by a computer, and the program instruction or the code is used to enable the computer to implement any one of the foregoing curb detection methods.

An embodiment of this application further provides a computer program product. The computer program product includes computer program instructions or code. The computer program instructions or the code is run by a computer, and the computer program instructions or the code is used to enable the computer to perform the corresponding steps and/or procedures in the foregoing method embodiments.

An embodiment of this application further provides a chip. The chip includes a processor. The processor is configured to run program instructions or code, to enable a device including the chip to perform any one of the foregoing curb detection methods.

For example, the chip further includes an input interface, an output interface, and a memory. The input interface, the output interface, the processor, and the memory are connected through an internal connection path, and the memory includes the program instructions or the code.

It should be further understood that "one embodiment", "an embodiment", and "a possible implementation" mentioned throughout the specification mean that specific features, structures, or characteristics related to this embodiment or an implementation are included in at least one embodiment of this application. Therefore, "in one embodiment" or "in an embodiment" or "a possible implementation" appearing throughout the specification does not necessarily refer to a same embodiment. In addition, these specific features, structures, or characteristics may be combined in one or more embodiments in any appropriate manner.

**Claims**

1. A curb detection method, wherein the method comprises:

   obtaining at least one to-be-detected image shot by an image capturing apparatus located on a vehicle, wherein the to-be-detected image comprises a curb, and the curb comprises an upper edge line, a lower edge line, and a middle seam line;

recognizing the at least one to-be-detected image to obtain a recognition result of the at least one to-be-detected image; and

obtaining detection information of the curb based on the recognition result, wherein the detection information comprises at least one of the following: geometry information, distance information, or height information of the curb.

2. The method according to claim 1, wherein the recognition result comprises at least one of the upper edge line or the lower edge line of the curb, and the detection information comprises the geometry information; and

the obtaining detection information of the curb based on the recognition result comprises:

performing geometry fitting on at least one of the upper edge line or the lower edge line of the curb in any to-be-detected image, to obtain the geometry information of the curb.

3. The method according to claim 1 or 2, wherein the recognition result comprises the lower edge line and the middle seam line of the curb, and the detection information comprises the distance information of the curb; and

the obtaining detection information of the curb based on the recognition result comprises:

obtaining a first lower edge point at which the middle seam line intersects with the lower edge line in any to-be-detected image; and

obtaining a first horizontal distance between the first lower edge point and the image capturing apparatus based on a position of the first lower edge point in any to-be-detected image, a focal length of the image capturing apparatus, and an installation height of the image capturing apparatus, wherein the distance information comprises the first horizontal distance.

4. The method according to claim 3, wherein the recognition result further comprises the upper edge line of the curb, and the detection information further comprises the height information of the curb; and

the obtaining detection information of the curb based on the recognition result further comprises:

obtaining a first upper edge point at which the middle seam line intersects with the upper edge line in any to-be-detected image, wherein the first upper edge point and the first lower edge point are located on the same middle seam line; and

obtaining the height information of the curb based on a position of the first upper edge point in any to-be-detected image, the first horizontal distance, the focal length of the image capturing apparatus, and the installation height of the image capturing apparatus.

5. The method according to claim 1 or 2, wherein there are a plurality of to-be-detected images, the recognition result comprises the upper edge line and the middle seam line of the curb, and the detection information comprises the distance information of the curb; and

the obtaining detection information of the curb based on the recognition result comprises:

obtaining a second upper edge point at which the middle seam line intersects with the upper edge line in a first image, and a third upper edge point in a second image that is located at a same position on the curb as the second upper edge point, wherein the first image is any to-be-detected image in the plurality of to-be-detected images other than a last to-be-detected image, and the second image is any to-be-detected image shot later than the first image; and

obtaining a second horizontal distance between a curb location of the second upper edge point and the image capturing apparatus based on a position of the second upper edge point in the first image, a position of the third upper edge point in the second image, positioning information of the vehicle, and rotation information of the vehicle, wherein the distance information comprises the second horizontal distance.

6. The method according to claim 5, wherein the detection information further comprises the height information of the curb, and the obtaining detection information of the curb based on the recognition result further comprises:

obtaining the height information of the curb based on the position of the second upper edge point in the first image, the position of the third upper edge point in the second image, the second horizontal distance, and the installation height of the image capturing apparatus.

7. The method according to any one of claims 1 to 6, wherein the at least one to-be-detected image is shot by a same image capturing apparatus.

8. A curb detection apparatus, wherein the apparatus comprises:

an obtaining module, configured to obtain at least one to-be-detected image shot by an image capturing apparatus located on a vehicle, wherein the to-be-detected image comprises a curb, and the curb comprises an upper edge line, a lower edge line, and a middle seam line; a recognition module, configured to recognize the at least one to-be-detected image to obtain a recognition result of the at least one to-be-detected image; and a detection module, configured to obtain detection information of the curb based on the recognition result, wherein the detection information comprises at least one of the following: geometry information, distance information, or height information of the curb.

9. The apparatus according to claim 8, wherein the recognition result comprises at least one of the upper edge line or the lower edge line of the curb, and the detection information comprises the geometry information; and the detection module is configured to perform contour fitting on at least one of the upper edge line or the lower edge line of the curb in any to-be-detected image, to obtain the geometry information of the curb.

10. The apparatus according to claim 8 or 9, wherein the recognition result comprises the lower edge line and the middle seam line of the curb, and the detection information comprises the distance information of the curb; and the detection module is configured to: obtain a first lower edge point at which the middle seam line intersects with the lower edge line in any to-be-detected image, and obtain a first horizontal distance between the first lower edge point and the image capturing apparatus based on a position of the first lower edge point in any to-be-detected image, a focal length of the image capturing apparatus, and an installation height of the image capturing apparatus, wherein the distance information comprises the first horizontal distance.

11. The apparatus according to claim 10, wherein the recognition result further comprises the upper edge line of the curb, and the detection information further comprises the height information of the curb; and the detection module is further configured to: obtain a first upper edge point at which the middle seam line intersects with the upper edge line in any to-be-detected image, wherein the first upper edge point and the first lower edge point are located on the same middle seam line, and obtain the height information of the curb based on a position of the first upper edge point in any to-be-detected image, the first horizontal distance, the focal length of the image capturing apparatus, and the installation height of the image capturing apparatus.

12. The apparatus according to claim 8 or 9, wherein there are a plurality of to-be-detected images, the recognition result comprises the upper edge line and the middle seam line of the curb, and the detection information comprises the distance information of the curb; and the detection module is configured to: obtain a second upper edge point at which the middle seam line intersects with the upper edge line in a first image, and a third upper edge point in a second image that is located at a same position on the curb as the second upper edge point, wherein the first image is any to-be-detected image in the plurality of to-be-detected images other than a last to-be-detected image, and the second image is any to-be-detected image shot later than the first image, and obtain a second horizontal distance between a curb location of the second upper edge point and the image capturing apparatus based on a position of the second upper edge point in the first image, a position of the third upper edge point in the second image, positioning information of the vehicle, and rotation information of the vehicle, wherein the distance information comprises the second horizontal distance.

13. The apparatus according to claim 12, wherein the detection information further comprises the height information of the curb, and the detection module is further configured to obtain the height information of the curb based on the position of the second upper edge point in the first image, the position of the third upper edge point in the second image, the second horizontal distance, and the installation height of the image capturing apparatus.

14. The apparatus according to any one of claims 8 to 13, wherein the at least one to-be-detected image is shot by a same image capturing apparatus.

15. A vehicle, wherein the vehicle comprises the curb detection apparatus according to any one of claims 8 to 14.

16. A computer system, wherein the computer system comprises a processor, and when the processor executes program instructions or code, the computer system implements the method according to any one of claims 1 to 7.

17. The computer system according to claim 16, wherein the computer system further comprises a memory, and the memory is configured to store the program instructions or the code.

18. A computer-readable storage medium, wherein the computer-readable storage medium stores at least one program instruction or code, the program instruction or the code is executed by a computer, and the program instruction or the code is used to enable the computer to implement the method according to any one of claims 1 to 7.

**19.** A computer program product, wherein the computer program product comprises computer program instructions or code, the computer program instructions or the code is run by a computer, and the computer program instructions or the code is used to enable the computer to implement the method according to any one of claims 1 to 7.

**20.** A chip, wherein the chip comprises a processor, and the processor is configured to run program instructions or code, to enable a device comprising the chip to perform the method according to any one of claims 1 to 7.

**21.** The chip according to claim 20, wherein the chip further comprises an input interface, an output interface, and a memory; the input interface, the output interface, the processor, and the memory are connected through an internal connection path; and the memory comprises the program instructions or the code.

FIG. 1

| | |
|---|---|
| Obtain at least one to-be-detected image shot by an image capturing apparatus located on a vehicle, where the to-be-detected image includes a curb, and the curb includes an upper edge line, a lower edge line, and a middle seam line | S201 |
| Recognize the at least one to-be-detected image to obtain a recognition result of the at least one to-be-detected image | S202 |
| Obtain detection information of the curb based on the recognition result, where the detection information includes at least one of the following: geometry information, distance information, or height information of the curb | S203 |

FIG. 2

To-be-detected image

Upper edge line

Middle seam line

Lower edge line

Parking space

Vehicle

FIG. 3

Obtain a first lower edge point and a first upper edge point → Obtain distance information → Obtain height information

FIG. 4

Obtain a second upper edge point and a third upper edge point → Obtain distance information → Obtain height information

FIG. 5

Curb detection apparatus

Obtaining module    601

Recognition module    602

Detection module    603

FIG. 6

Computer system

Processor    701

Memory    702

FIG. 7

## INTERNATIONAL SEARCH REPORT

International application No.

**PCT/CN2023/132529**

### A. CLASSIFICATION OF SUBJECT MATTER

G06V 20/56(2022.01)i; G06T 7/60(2017.01)i; G06T 7/73(2017.01)i; G06V 10/762(2022.01)i

According to International Patent Classification (IPC) or to both national classification and IPC

### B. FIELDS SEARCHED

Minimum documentation searched (classification system followed by classification symbols)

IPC: G06V G06T

Documentation searched other than minimum documentation to the extent that such documents are included in the fields searched

Electronic data base consulted during the international search (name of data base and, where practicable, search terms used)

CNTXT: CNABS; CNKI; VEN; USTXT; WOTXT; EPTXT: 路沿, 边沿, 边界, 上沿线, 下沿线, 中缝线, 图像, 车辆, 形态, 拟合, 距离, 高度, edge, boundary, upper line, lower line, middle stitch, image, vehicle, fitting, distance, height

### C. DOCUMENTS CONSIDERED TO BE RELEVANT

| Category* | Citation of document, with indication, where appropriate, of the relevant passages | Relevant to claim No. |
|---|---|---|
| Y | CN 111898491 A (SHANGHAI GOLDWAY INTELLIGENT TRANSPORTATION SYSTEMS CO., LTD.) 06 November 2020 (2020-11-06) description, paragraphs [0006]-[0117] | 1, 2, 8, 9, 15-21 |
| Y | CN 114091506 A (GUANGDONG YINGFENG INTELLIGENT SANITATION TECHNOLOGY CO., LTD. et al.) 25 February 2022 (2022-02-25) description, paragraphs [0004]-[0029] | 1, 2, 8, 9, 15-21 |
| A | CN 115248447 A (SHANGHAI XIANTU INTELLIGENT TECHNOLOGY CO., LTD.) 28 October 2022 (2022-10-28) entire document | 1-21 |
| A | US 2011063097 A1 (HITACHI AUTOMOTIVE SYSTEMS LTD.) 17 March 2011 (2011-03-17) entire document | 1-21 |

☐ Further documents are listed in the continuation of Box C.     ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **21 January 2024** | **24 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/132529**

| Patent document cited in search report | | | Publication date (day/month/year) | Patent family member(s) | | | Publication date (day/month/year) |
|---|---|---|---|---|---|---|---|
| CN | 111898491 | A | 06 November 2020 | None | | | |
| CN | 114091506 | A | 25 February 2022 | None | | | |
| CN | 115248447 | A | 28 October 2022 | CN | 115248447 | B | 02 June 2023 |
| | | | | WO | 2023050638 | A1 | 06 April 2023 |
| US | 2011063097 | A1 | 17 March 2011 | JP | 2010072807 | A | 02 April 2010 |
| | | | | JP | 5089545 | B2 | 05 December 2012 |
| | | | | WO | 2010032523 | A1 | 25 March 2010 |
| | | | | US | 8411900 | B2 | 02 April 2013 |
| | | | | EP | 2336999 | A1 | 22 June 2011 |
| | | | | EP | 2336999 | A4 | 30 October 2013 |
| | | | | EP | 2336999 | B1 | 22 April 2020 |

Form PCT/ISA/210 (patent family annex) (July 2022)

**EP 4 657 393 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310092142